Europäisches Patentamt

European Patent Office

Office européen des brevets

(19)

(11) Veröffentlichungsnummer: **0 399 380**
**A1**

## (12) EUROPÄISCHE PATENTANMELDUNG

(21) Anmeldenummer: **90109389.8**

(22) Anmeldetag: **18.05.90**

(51) Int. Cl.⁵: **C02F 3/06, C02F 3/10,**
**C02F 3/20, C02F 3/22**

(30) Priorität: **20.05.89 DE 3916520**
**03.06.89 DE 8906830 U**

(43) Veröffentlichungstag der Anmeldung:
**28.11.90 Patentblatt 90/48**

(84) Benannte Vertragsstaaten:
**AT BE CH DE ES FR IT LI LU NL**

(71) Anmelder: **Zimmer, Erich Helmut, Dipl.-Ing.**
**Orffstrasse 6**

**D-6700 Ludwigshafen(DE)**

(72) Erfinder: **Zimmer, Erich Helmut, Dipl.-Ing.**
**Orffstrasse 6**
**D-6700 Ludwigshafen(DE)**

(74) Vertreter: **Patentanwälte Dipl.-Ing. F.W. Möll**
**Dipl.-Ing. H.Ch. Bitterich**
**Langstrasse 5 Postfach 2080**
**D-6740 Landau/Pfalz(DE)**

(54) **Kläranlage.**

(57) Im Inneren eines Klärreaktors (10) mit wärmegedämmter Wand (12), wärmegedämmten, trichterförmigem Boden (11) und gegebenenfalls gasdichtem Deckel (13) ist ein zentrales Strahlrohr (20) befestigt, dessen unteres Ende als Ansaugtrichter (21) ausgebildet ist. Die zu klärende Flüssigkeit wird über eine Reaktorzuleitung (1) zugeleitet, das geklärte Abwasser über eine Reaktorableitung (2) abgeleitet. In einer Vertiefung (14) im Boden (11) steht eine Belüftungseinrichtung, gebildet durch eine Tauchpumpe (40), eine Wasserstrahlgaspumpe (30) und eine Gasleitung (4). Dank der Belüftungseinheit (30, 40) bildet sich im Inneren des Reaktors (10) eine Kreisströmung aus. Füllkörper (28) in Form von extrudierten Kunststoffrohrabschnitten, die als zusätzliche Aufwuchsflächen für die Klärbakterien dienen, werden mit der Kreisströmung ständig umgewälzt. Dies verbessert die Versorgung der Mikroorganismen mit Sauerstoff und Nährstoffen, verbessert die Klärwirkung, beugt der Bildung von Faulzonen vor und verhindert das Verblocken der Füllkörper (28). Aufgrund unterschiedlicher Sauerstoffkonzentrationen im Reaktor (10) bilden sich verschiedene Zonen aus, eine rein aerobe Zone im Inneren des Strahlrohrs (20), eine gemäßigt aerobe Zone außerhalb des Strahlrohrs (20) im oberen Reaktorbereich und eine gemäßigt fakultative Zone im unteren Reaktorbereich. Dank dieser Zonenbildung wird das Abwasser im Reaktor (10) sowohl nitrifiziert als auch denitrifiziert.

FIG. 3

## Kläranlage

Die Erfindung betrifft eine Kläranlage, bestehend aus einem biologischen Klärreaktor nach dem aerob/fakultativ/anaeroben Prinzip mit Füllkörpern als Aufwuchsfläche für sessile Mikroorganismen und einem Nachklärbecken, gemäß dem Oberbegriff des Anspruchs 1.

Ein nach dem aerob/fakultativen Prinzip arbeitender Klärreaktor ist beispielsweise bekannt aus der DE-A-37 26 949. In einem zylindrischen Behälter mit trichterförmigem Gitterboden wird durch eine Vielzahl von kugelförmigen Füllkörpern, wie sie beispielsweise in der DE-A-36 39 159 beschrieben sind, ein Reaktorbett gebildet. An der tiefsten Stelle des trichterförmigen Bodens ist eine Abzugsleitung für die Füllkörper vorgesehen. Die abgezogenen Füllkörper werden in einer externen Anlage entweder durch Wasserstrahlen oder durch Bürsten von den anhängenden Mikroorganismen gereinigt und über eine weitere Leitung dem Reaktorbett wieder zugeführt. Die üblichen Zu- und Ableitungen für Abwasser, Reinwasser und Schlamm sind ebenfalls vorgesehen.

Flache Klärbecken, in denen zur Erhöhung des Schlammindexes poröse Schaumstoffwürfel als Aufwuchsflächen für Mikroorganismen schwimmen, sind beispielsweise bekannt aus der EP-A-100 007, der EP-A-238 902 und der DE-A-35 23 844. Am Boden der Becken sind Druckluftbelüftungsanlagen vorgesehen, die den erforderlichen Sauerstoff eintragen. Mit Hilfe einer geeigneten Fördereinrichtung, beispielsweise einer Mammutpumpe, wird kontinuierlich ein Teil der Schaumstoffwürfel aus dem Becken abgezogen, in einer externen Anlage teilweise oder ganz von den Mikroorganismen befreit und dann dem Becken wieder zugeführt.

Aus der DE-A-28 45 652 schließlich ist ein biologischer Klärreaktor bekannt, dessen Behälter ebenfalls ein aus Füllkörpern geschüttetes Reaktorbett sowie eine Begasungseinrichtung aufweist. Die Füllkörper besitzen Kugel- oder Torusform. Durch eine geeignete Fördereinrichtung wird kontinuierlich ein Teil der Füllkörper aus dem Reaktorbett abgezogen, in einer externen Waschanlage von den Mikroorganismen befreit und durch eine weitere Leitung in den Reaktor zurückgeführt.

Den im zitierten Stand der Technik beschriebenen Maßnahmen liegt die Absicht zugrunde, einerseits den Schlammindex im Klärbecken bzw. Klärreaktor zu erhöhen, indem den Mikroorganismen zusätzliche Aufwuchsflächen in Form der Füllkörper zur Verfügung gestellt werden, andererseits aber ein Verstopfen des Reaktorbetts durch die auf den Füllkörpern wachsenden Mikroorganismen zu verhindern.

Das beschriebene Verfahren mit den in flachen Klärbecken schwimmenden Schaumstoffkörpern konnte sich in der Praxis nicht bewähren. Auch die übrigen Verfahren sind, soweit bekannt, nicht über das Versuchsstadium hinausgekommen.

Eine wesentliche Voraussetzung für eine hohe Effektivität des Klärvorgangs und eine optimale Ausnutzung der zum Betrieb einer Kläranlage aufgewendeten Energie ist eine optimale Vermischung von Abwasser, Schlamm und Luft, eine optimale Belüftung, eine optimale Temperaturführung und eine Gestaltung des Klärreaktors derart, daß die für den Abbau der verschiedenen Schadstoffe verantwortlichen Mikroorganismen die für sie optimalen Lebensbedingungen finden.

Ein wesentlicher Vorgang in den aerob arbeitenden Kläranlagen ist die sogenannte Nitrifikation. Darunter versteht man die Oxidation von Ammonium zu Nitrat mit Hilfe von aeroben Bakterien. Dies sind im wesentlichen die parasymbiontisch zusammenlebenden Gattungen Nitrosomonas und Nitrobacter. Erstere sind Nitritbildner, letztere sind Nitratbildner. Als Nebenprodukt entstehen bis zu 10 % $N_2O$ und NO. Die freiwerdende Energie in Höhe von 787 kJ/Mol wird von den Bakterien zu etwa 10 % verbraucht.

Werden die Nitrate zusammen mit dem gereinigten Abwasser in die Gewässer geleitet, kommt es zu der bekannten Überdüngung. Die Nitrate sollten daher in der Kläranlage abgebaut werden. Diese sogenannte Denitrifikation erfolgt ebenfalls mit Hilfe von Bakterien, z. B. Pseudomonas stutzeri oder Micrococus denitrificans. Diese Bakterien sind Anaerobier. Sie benutzen den bei der Reduktion von Nitraten freiwerdenden Sauerstoff als Wasserstoffakzeptor für den Abbau organischer Nährstoffe. Mit der dabei gewonnenen Energie halten die Bakterien ihren Stoffwechsel in Gang.

Schließlich muß das die Kläranlage verlassende Abwasser auch frei von organischen Bestandteilen, dem sogenannten Klärschlamm, sein. Klärschlamm wird üblicherweise sedimentiert. Hierzu werden große, flache, kreisförmige Becken mit einem flach-trichterförmigen Boden verwendet. Das Abwasser wird durch den Boden des Nachklärbeckens zentral zugeführt. Das Wasser-Schlamm-Gemisch steigt zunächst vom Rohrende aufwärts bis zum Flüssigkeitsspiegel, worauf die schweren Schlammbestandteile sedimentieren und sich am Beckenboden absetzen, wo sie einen entsprechenden Schlammkegel ausbilden. Enthält das Abwasser Schwimm- und Blähschlämme, sammeln sich diese an der Flüssigkeitsoberfläche an und gelangen mit dem Abwasser in die Ablaufrinne und somit in die Gewässer.

Der vorliegenden Erfindung liegt die Aufgabe zugrunde, eine Kläranlage, bestehend aus einem Klärreaktor und einem Klärbecken, der eingangs genannten Art anzugeben, die einfach und preiswert herzustellen ist, eine einfache, robuste, energiesparende Betriebsweise ermöglicht und den am Klärvorgang beteiligten Bakterien und Mikroorganismen optimale Lebensbedingungen bietet.

Diese Aufgabe wird gelöst durch eine gattungsgemäße Kläranlage mit den Merkmalen gemäß Kennzeichen des Anspruchs 1.

Damit bilden sich in der Kläranlage im wesentlichen vier Verfahrenszonen aus:

1. Eine intensiv belüftete primäre Zone im Zentrum des Reaktorbehälters. Hier werden Abwasser, Biomasse und Luft innig vermischt. Hier wird das Abwasser nitrifiziert.

2. Eine weniger belüftete sekundäre Zone in dem das innere als Tauchrohr ausgebildete Strahlrohr umgebenden Behälterbereich. Hier wird das Abwasser ebenfalls nitrifiziert.

3. Eine leicht bis mäßig fakultative, anoxische dritte Zone. Diese dritte Zone liegt im wesentlichen unterhalb der zweiten Zone und umfaßt auch den trichterförmigen Bodenbereich. In dieser Zone wird das Abwasser denitrifiziert.

4. Eine stark fakultative, vierte Zone im Nachklärbecken. Hier wird das Abwasser vollständig denitrifiziert. Der Klärschlamm wird sedimentiert.

Auf analoge Weise werden auch Phosphor- und Schwefelverbindungen mit Hilfe spezifischer Bakterien abgebaut.

Dank der Kreisströmung durch die erste, zweite und dritte Zone werden Abwasser und Schlamm mehrmals dem aeroben Teil des Reaktors zugeführt, wo optimale Bedingungen für die Nitrifikation vorliegen, ebenso oft aber auch dem fakultativen Teil des Reaktors, wo optimale Bedingungen für die Denitrifikation vorliegen. Insbesondere im trichterförmigen Bodenbereich bildet sich ein ausgeprägt fakultatives Milieu für die erforderliche Denitrifikation aus.

Von besonderer Bedeutung für die vorliegende Erfindung ist der Schutz des Reaktors gegen Wärmeverluste einerseits und das angegebene Verhältnis von Reaktorhöhe zu Reaktordurchmesser bzw. -breite andererseits. Beide Maßnahmen sorgen dafür, daß die beim Bakterienstoffwechsel entstehende Wärmeenergie im Reaktor verbleibt. Auf diese Weise wird es möglich, die in wissenschaftlichen Untersuchungen bestätigte Tatsache auszunutzen, daß der Bakterienstoffwechsel und damit der Klärvorgang schneller ablaufen, wenn die Temperatur höher liegt, als es in herkömmlichen Kläranlagen der Fall ist, wo die Becken direkt in das Erdreich eingebettet sind und somit dessen Temperatur annehmen oder die Behälter frei stehen und somit die Lufttemperatur annehmen.

Von hervorragender Bedeutung für die Erfindung ist weiterhin die Verwendung einer Wasserstrahlgaspumpe mit Venturirohr, deren Wasserstrahl von einer Flüssigkeitspumpe, vorzugsweise einer auf dem Reaktorboden stehenden Tauchpumpe, erzeugt wird. Dadurch kann in vielen Fällen der in den bekannten druckbelüfteten Kläranlagen erforderliche gesonderte Drucklufterzeuger entfallen. Darüber hinaus stellt sich eine äußerst intensive Vermischung des angesaugten Gases mit dem Abwasserstrahl ein. Durch das nachgeschaltete Venturirohr wird der in der Düse entstehende Druckabfall mit Ausnahme des geringen Reibungsanteils und des zur Luftansaugung erforderlichen Energieanteils wiedergewonnen. Der zum Betrieb einer solchen Injektor-Belüftung erforderliche Energiebedarf ist erheblich geringer als der Energiebedarf herkömmlicher, separater Druckluftgebläse. Gleichzeitig sorgt der Wasserstrahl für die erforderliche Umwälzung der zu klärenden Flüssigkeit, wodurch die Mikroorganismen optimal mit Sauerstoff und Nährstoffen versorgt werden. Schließlich wird dadurch auch einer Entstehung von unkontrollierten Faulzonen vorgebeugt.

Von entscheidender Bedeutung für die vorliegende Erfindung ist schließlich, daß die von der Belüftungseinrichtung ausgebildete Kreisströmung kontinuierlich einen Teil der Füllkörper erfaßt. Das heißt, daß ein Teil der Füllkörper am Boden des inneren Strahlrohrs angesaugt und durch die erste Zone nach oben gewirbelt wird, um dann allmählich durch die zweite und dritte Zone hindurch wieder bis zur Ansaugstelle zu gelangen. Die Füllkörper bilden also im Gegensatz zu den bekannten Lösungen kein definiertes Reaktorbett, das verblocken und verstopfen könnte. Wie mehrmonatige Versuche gezeigt haben, sind die Füllkörper frei von den in den bekannten Festbettreaktoren zu beobachtenden mehrere Zentimeter langen Bakterienfäden. Gleichwohl steigt die Raumbelastung $B_R$ auf bis zu 3 kg BSB/m$^3$ • d an, ohne daß die Nitrifikation zum Stehen gekommen wäre. Dies ist besonders überraschend, da laut der einschlägigen Literatur die Nitrifikation nur bei Raumbelastungen $B_R$ = 0,2 - 0,4 kg BSB/m$^3$ • d ablaufen soll.

Gemäß einer Weiterbildung der Erfindung ist der Klärreaktor mittels Deckel vorzugsweise gasdicht verschlossen. Hierdurch wird zunächst das unerwünschte Entweichen von Wärmeenergie verhindert. Dank des gasdichten Verschlusses lassen sich jedoch zusätzliche Effekte erreichen. Stickoxide und Geruchsstoffe können nicht unkontrolliert in die Atmosphäre gelangen. Wichtiger ist jedoch, daß der Reaktor mit speziellen Gasen, beispielsweise mit reinem Sauerstoff begast und der unverbrauchte Gasanteil wiedergewonnen werden kann.

Dank der besonderen Konstruktion eignet sich der erfindungsgemäße Reaktor auch als Bio-Filter zur Reinigung von Abgasen bzw. Abluft. Bei vielen Prozessen entstehen stark riechende, teilweise auch gesundheitsschädliche (Merkaptane) Abgase, z. B. in Form von Brüden bei der thermischen Trocknung oder Verbrennung von Klärschlamm. Diese Abgase können über die Gasleitung in den Reaktor eingeführt werden, wo sie dank der großen Biomasse, des großen Flüssigkeitsvolumens und der gasdichten Konstruktion zusammen mit dem Abwasser durch die Mikroorganismen gereinigt werden.

Schließlich kann im Reaktor je nach Bedarf Überdruck oder Unterdruck erzeugt werden, wobei sich überraschenderweise herausgestellt hat, daß dem Unterdruck die weitaus größere Bedeutung zukommt.

Unterdruck entsteht bereits in der Wasserstrahlgaspumpe. Er sorgt dafür, daß Gas bzw. Luft angesaugt und innigst mit dem Abwasser vermischt wird. Der Unterdruck sorgt ferner dafür, daß in der Flüssigkeit gelöste Gase verstärkt ausperlen. Da Sauerstoff und Stickstoff mit der Belüftungseinrichtung ständig nachgeliefert werden, werden mit Hilfe des Unterdrucks in erster Linie die beim Klärvorgang entstehenden Schadgase aus der Flüssigkeit entfernt.

Schließlich verbessert ein Unterdruck im Reaktorbehälter auch den Gaseintrag mit Hilfe der Wasserstrahlgaspumpe. Insbesondere bei tiefen Reaktorbehältern erzeugt die Flüssigkeitssäule über der Belüftungseinrichtung einen erheblichen Gegendruck. Dieser kann durch einen entsprechenden Unterdruck wirksam herabgesetzt werden.

Es versteht sich, daß der Gegendruck der Flüssigkeitssäule über der Belüftungseinrichtung ganz oder teilweise auch dadurch beseitigt werden kann, daß die Gaszufuhr zur Wasserstrahlgaspumpe mit Hilfe einer Druckgasleitung erfolgt.

Dabei kann in der Gasleitung zur Belüftungseinrichtung zusätzlich ein Umschalt- bzw. Abschaltventil vorgesehen sein, so daß je nach Bedarf mit Überdruck, Atmosphärendruck oder auch ohne Gaszufuhr gearbeitet werden kann.

Eine wesentliche Steigerung der Denitrifikation wird durch intermittierenden Betrieb des Reaktors erreicht. Dazu wird zeitweise die Gas- bzw. Luftzufuhr abgesperrt, während die Umwälzpumpe weiterläuft. Aufgrund der hohen Raumbelastung und der großen Menge atmungsaktiver Biomasse kommt es schnell zu einem Sauerstoffdefizit und somit zu den gewünschten fakultativen bzw. anoxischen Bedingungen. Dank der Umwälzpumpe bleiben Schlamm, nitrathaltiges Abwasser und Mikroorganismen innig vermischt. Hilfseinrichtungen wie in herkömmlichen Kläranlagen entfallen.

Gemäß einer vorteilhaften Weiterbildung der Erfindung ist der den Füllkörpern zur Verfügung stehende Reaktorbereich durch einen für Flüssigkeit und Schlamm durchlässigen, vorzugsweise trichterförmigen Rost nach unten begrenzt. Hierdurch wird sichergestellt, daß die Füllkörper immer in die Ansaugzone gelangen, Schlamm und Abwasser dagegen auch in die oben erwähnte dritte Zone mit fakultativem, d. h. anoxischem Milieu.

Um die Umwälzung der Füllkörper zu verbessern, empfiehlt es sich, das untere Ende des inneren Strahlrohrs als Ansaugtrichter auszubilden.

Um bei Wartung oder Reparatur die Belüftungseinrichtung und insbesondere die auf dem Boden des Behälters vorzugsweise in einer Vertiefung stehende Tauchpumpe ohne größere Demontagen nach oben herausziehen zu können, ist im Rost ein zentrales Schutzrohr vorgesehen, dessen Durchmesser dem Durchmesser der Belüftungseinrichtung, vorzugsweise der Pumpe, entspricht.

Gemäß einer Weiterbildung der Erfindung kann zwischen Reaktorwand und innerem Strahlrohr ein zweites Tauchrohr eingesetzt werden, wobei dieses für eine optimale Rückgewinnung der Wärmeenergie aus der wandnahen Flüssigkeit ausgelegt ist. Das Durchmesserverhältnis von innerem Strahlrohr zu äußerem Tauchrohr sollte zwischen 1 : 5 und 3 : 4 liegen. In der so gebildeten äußeren Ringzone steigt die bereits gereinigte Flüssigkeit langsam nach oben zum Überlauf. Da dieser Zone kein Sauerstoff mehr zugeführt wird, bildet sich dort ein ausgeprägt fakultatives Milieu aus. Das Abwasser wird denitrifiziert. Gleichzeitig haben die sedimentationsfähigen Schlämme ausreichend Zeit, sich abzusetzen. Der äußere Behälterbereich wirkt als Nachklärzone und erspart unter Umständen den Bau eines gesonderten Nachklärbeckens.

Vorteilhafterweise können Reaktorzulaufrohr bzw. Schlammrückführungsrohr tangential in den Klärreaktor eingeführt sein. Auf diese Weise wird der Kreisströmung im Reaktor eine Drallströmung überlagert, was die Durchmischung noch weiter verbessert.

Gemäß einer Ausgestaltung der Erfindung erweitert sich der den Füllkörpern zur Verfügung stehende Reaktorbereich nach unten konisch. Hierdurch wird einer möglichen Anlagerung der Füllkörper an der Wand, ausgelöst durch Kreisströmung und gegebenenfalls Drallströmung, sicher vorgebeugt.

Vorzugsweise bestehen die Füllkörper aus extrudierten Kunststoff-Rohrabschnitten, vorzugsweise aus Hart-PVC. Dieses Material ist leicht, preiswert und hat sich in den Versuchen optimal bewährt.

Wie schon erwähnt, ist auch eine gute Nachklärung der gereinigten Abwässer erforderlich. Für den Fall, daß ein eigenes Nachklärbecken vorgesehen ist, empfiehlt es sich, dieses wie an sich bekannt mit einem flach-trichterförmigen Boden und einem zentralen Zulauf auszuführen, den zentralen Zulauf jedoch bis knapp unter den Flüssigkeitsspiegel hochzuziehen und ferner das Becken in zwei vorzugsweise konzentrische Teilbecken zu unterteilen, indem eine Tauchwand eingebaut wird. Hierdurch wird erreicht, daß ausgehend vom zentralen Zulauf eine nur abwärts gerichtete Flüssigkeitsströmung gebildet wird, die die Sedimentation wirksam unterstützt, und daß die Sedimentation hauptsächlich im ersten, inneren Teilbecken erfolgt.

Bläh- und Schwimmschlammanteile im nachzuklärenden Abwasser werden durch die Tauchwand zurückgehalten. In diesem Fall empfiehlt es sich, im inneren Teilbecken eine Abzugsrinne für Schwimmschlamm vorzusehen.

Anhand der Zeichnung soll die Erfindung in Form von Ausführungsbeispielen näher erläutert werden. Es zeigen

Fig. 1 eine schematische Darstellung einer Kläranlage, bestehend aus einem Klärreaktor und einem gesonderten Nachklärbecken,

Fig. 2 einen Schnitt durch ein gesondertes Nachklärbecken,

Fig. 3 einen Vertikalschnitt durch einen ersten Klärreaktor,

Fig. 4 einen Vertikalschnitt durch einen zweiten Klärreaktor,

Fig. 5 einen Horizontalschnitt durch den Klärreaktor der Fig. 4 und

Fig. 6 eine Umwälz- und Belüftungseinheit.

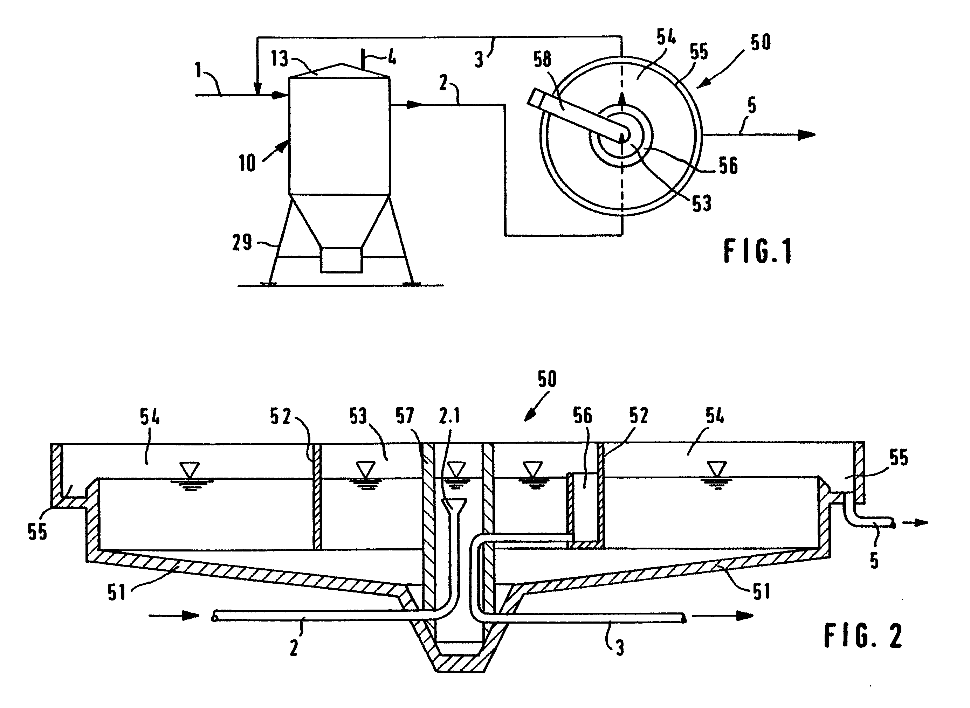

Fig. 1 zeigt schematisch eine Kläranlage, bestehend aus einem auf Füßen 29 aufgestellten Klärreaktor 10 und einem gesonderten Nachklärbecken 50. Der Behälter des Klärreaktors 10 ist mit einem Deckel 13 vorzugsweise gasdicht verschlossen. Das zu klärende Abwasser wird über eine Reaktorzuleitung 1 zugeführt, das gereinigte Abwasser über eine Reaktorableitung 2 ab- und dem Nachklärbecken 50 zugeführt. Über eine Gasleitung 4 wird der Flüssigkeit im Inneren des Reaktors 10 der erforderliche Sauerstoff zugeführt.

Das Nachklärbecken 50, das in Fig. 2 im Schnitt und vergrößert abgebildet ist, ist kreisrund und besitzt einen flach-trichterförmigen Boden 51. Im Zentrum ist ein Auflager 57 für eine Schlammräumbrücke 58 angeordnet.

Durch den Einbau einer Tauchwand 52 ist das Nachklärbecken 50 in zwei konzentrische Teilbecken 53, 54 unterteilt. Die Austrittsöffnung 2.1 der Leitung 2 endet knapp unter dem Flüssigkeitsspiegel. Da die Flüssigkeit auf ihrem Weg zu der am Umfang des Nachklärbeckens 50 vorgesehenen Abzugsrinne 55 unter der Tauchwand 52 hindurch muß, entsteht im inneren Teilbecken 53 eine ausgeprägte, nach unten gerichtete Strömungskomponente, die die Sedimentation der Klärschlämme wirksam unterstützt. Die Hauptmenge der sedimentierten Klärschlämme sammelt sich im Bereich des inneren Teilbeckens 53, wo sie wie an sich bekannt mit Hilfe der Schlammräumbrücke 58 entfernt wird.

Falls auch Schwimm- und Blähschlämme in das Nachklärbecken 50 gelangen, werden diese von der Tauchwand 52 zurückgehalten. Sie können mit einer gesonderten Abzugsrinne 56 aufgefangen und mit Hilfe einer Schlammrückführungsleitung 3 dem Klärreaktor wieder zugeführt werden.

Das gereinigte und nachgeklärte Abwasser wird von der Abzugsrinne 55 über eine Leitung 5 in den natürlichen Wasserkreislauf abgeleitet.

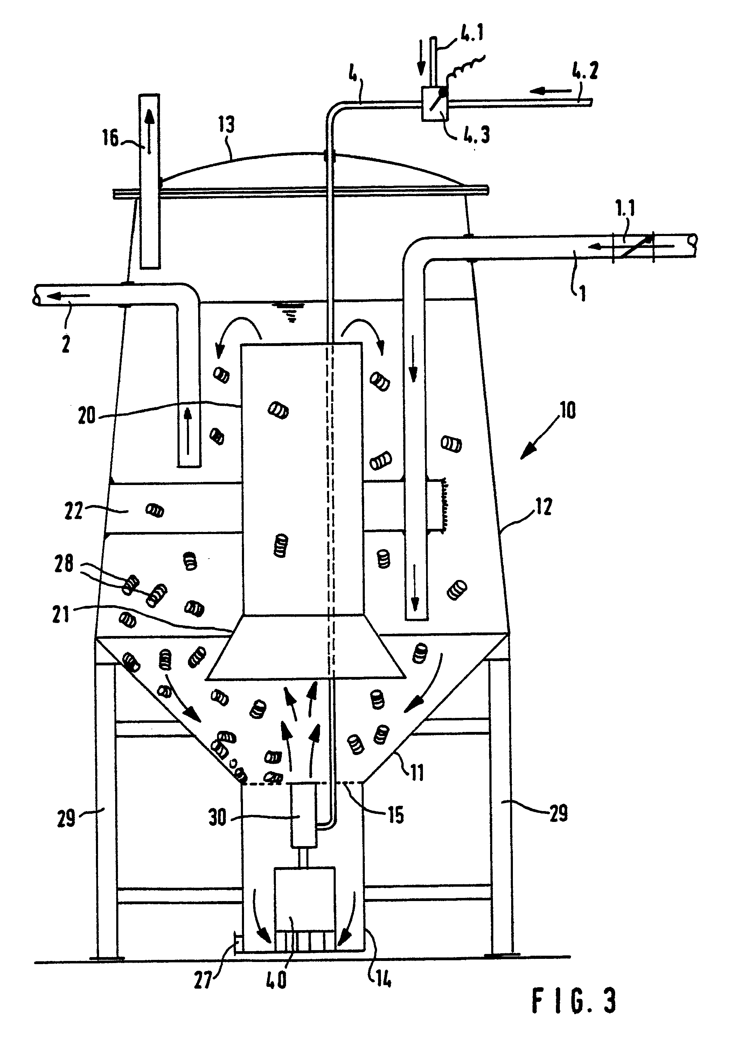

Fig. 3 zeigt eine erste Ausführungsform eines Klärreaktors 10. Man erkennt einen Behälter, der auf einem Fußgestell 29 steht. Der Durchmesser des Behälters erweitert sich von oben nach unten leicht konisch und geht schließlich in einen trichterförmigen Boden 11 über. Im Zentrum des Bodens 11 ist eine Vertiefung 14 ausgebildet, die oben mit Hilfe eines Rostes 15 abgedeckt ist. Ein Rohrstutzen 27 ermöglicht im Bedarfsfall die totale Entleerung des Behälters 10.

Wand 12, Boden 11 und gegebenenfalls Deckel 13 sind ausreichend wärmegedämmt, um die beim Klärvorgang entstehende Wärme zu einer Temperaturerhöhung ausnützen zu können.

Im Inneren des Behälters 10 ist mittels Halterungen 22 ein zentrales, als Tauchrohr ausgebildetes Strahlrohr 20 montiert, dessen oberes Ende unterhalb des Flüssigkeitsspiegels liegt. Das untere Ende des Strahlrohrs 20 ist als Ansaugtrichter 21 ausgebildet, dessen Funktion noch erläutert werden soll. Unter dem Strahlrohr 20 und in der Vertiefung 14 im Behälterboden 11 steht die eigentliche Belüftungseinheit, gebildet aus einer Tauchpumpe 40 und einer Wasserstrahlgaspumpe 30 mit Venturirohr. An die Wasserstrahlgaspumpe 30 ist die Gasleitung 4 angeschlossen. Die Tauchpumpe 40 pumpt Abwasser und Schlamm durch die Wasserstrahlgaspumpe 30. Der dabei erzeugte Unterdruck saugt Umgebungsluft über die Gasleitung 4 an und vermischt sie innig mit der Flüssigkeit. Das Abwasser-Schlamm-Gas-Gemisch strömt dann durch das Strahlrohr 20 nach oben, um im äußeren Behälterbereich wieder abzusinken, so daß im Reaktor 10 eine Kreisströmung entsteht.

Im Reaktor 10 sind ferner Füllkörper 28 in Form von Rohrabschnitt aus Kunststoff, vorzugsweise Hart-PVC eingefüllt. Diese Füllkörper 28 dienen wie an sich bekannt als zusätzliche Aufwuchsfläche für die Mikroorganismen, die den Klärvorgang bewirken, insbesondere das Abwasser nitrifizieren und denitrifizieren.

Sobald ein Füllkörper 28 in den Sogbereich des im Strahlrohr 20 nach oben steigenden Abwasser-Schlamm-Gas-Gemischs gelangt, wird er mit diesem nach oben gefördert. Auf diese Weise unterliegen auch die Füllkörper 28 einem ständigen Kreislauf im Reaktor 10. Dies ermöglicht eine optimale Versorgung der Mikroorganismen mit Nährstoffen und Sauerstoff; gleichzeitig wird verhindert, daß Füllkörper 28 und Mikroorganismen zu einem unbeweglichen Block zusammenwachsen können, wie es in herkömmlichen Festbettreaktoren immer wieder beobachtet wird.

Überraschenderweise konnte festgestellt werden, daß die in den bekannten Anlagen immer zu beobachtenden, zentimeterlangen Bakterienfäden nicht auftreten.

In den weitaus überwiegenden Fällen wird es genügen, wenn über die Gasleitung 4 Luft angesaugt wird. In speziellen Fällen muß jedoch mit besonderen Gasen, beispielsweise reinem Sauerstoff, gearbeitet werden. Hier zeigt sich der Vorteil des gasdichten Deckels 13, da er es ermöglicht, daß nicht verbrauchte Gasanteile gesammelt und über die Ableitung 16 wiederverwendet werden können.

Dank eines in die Gasleitung 4 eingesetzten Um- und Abschaltventils 4.3 kann abwechselnd Luft über die Leitung 4.1 oder Gas, beispielsweise Druckgas, aber auch Abgas oder geruchsbelastete Abluft aus Produktions- oder Verbrennungsprozessen, über die Druckgasleitung 4.2 angesaugt oder die Gasleitung 4 völlig abgesperrt werden.

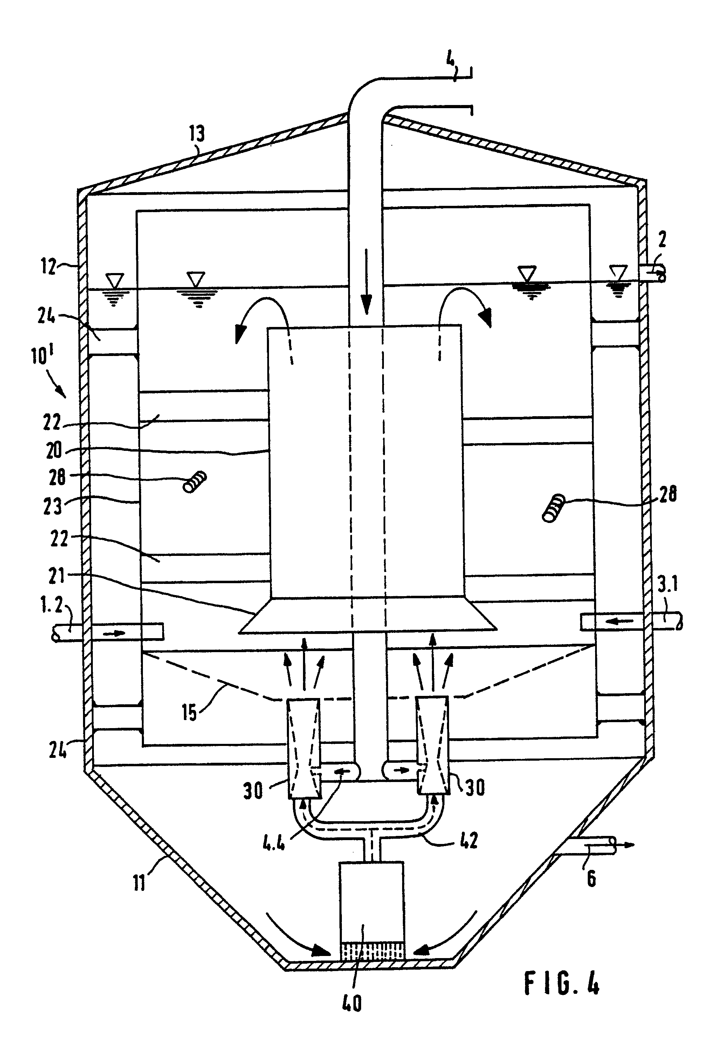

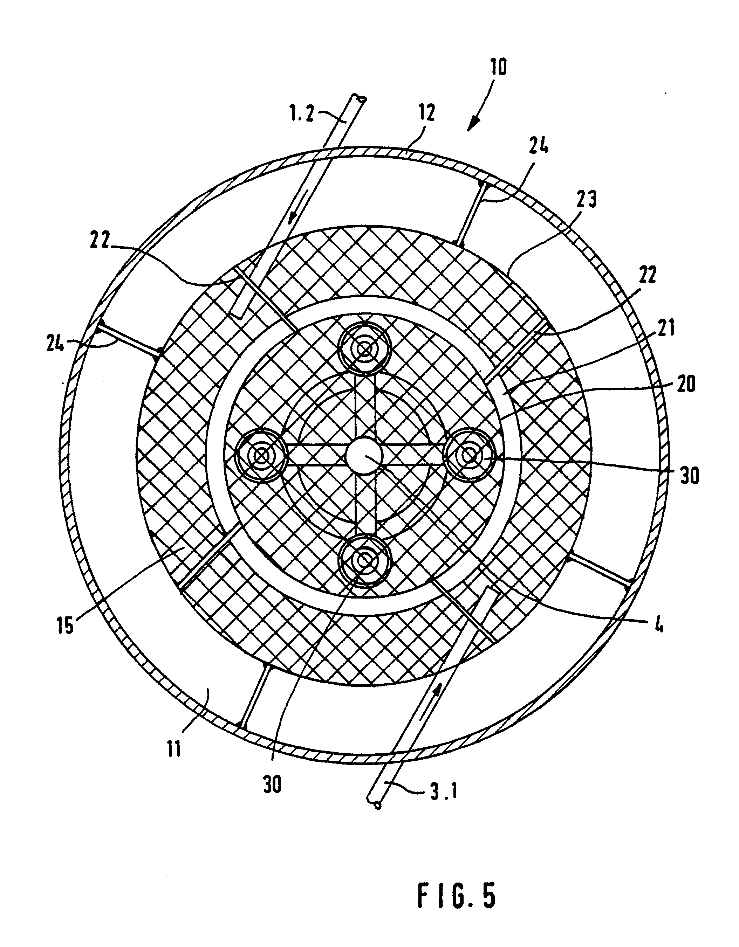

Die Fig. 4 und 5 zeigen im Längsschnitt bzw. Querschnitt einen weiteren Reaktor 10'. Zwischen der wärmegedämmten Behälterwand 12 und dem inneren Strahlrohr 20 ist ein äußeres Tauchrohr 23 vorgesehen, befestigt mit Hilfe von Halterungen 24. Die Belüftungseinrichtung besteht aus einer Tauchpumpe 40, die über eine Leitung 42 vier oder mehr Wasserstrahlgaspumpen 30 speist. Die Gasleitung 4 ist über je eine Verbindungsleitung 4.4 an die Wasserstrahlgaspumpen 30 angeschlossen.

Der den Füllkörpern 28 zur Verfügung stehende Behälterbereich ist nach außen begrenzt durch das äußere Tauchrohr 23, nach unten durch den Rost 15. Unter der Wirkung des Abwasser-Schlamm-Gas-Gemischs, das im Zentrum des inneren Strahlrohrs 20 nach oben steigt, werden auch die Füllkörper 28 in die Kreisströmung einbezogen.

Um der Kreisströmung eine Drallströmung überlagern zu können, sind Reaktorzulauf 1.2 bzw. Schlammrückführungsrohr 3.1 tangential in den Reaktor 10 eingeführt.

Da der Reaktorbereich zwischen der Behälterwand 12 und dem äußeren Tauchrohr 23 nicht in die Kreisströmung einbezogen ist, wird er auch nicht mit Sauerstoff versorgt, so daß sich hier ein ausgeprägt fakultatives Milieu ausbildet, wie es für eine Denitrifizierung des Abwassers optimal ist. Aufgrund der relativ großen Fläche steigt das Abwasser nur langsam nach oben zum Reaktorablauf 2, so daß die Klärschlämme sedimentieren können. Die äußere Reaktorzone ersetzt somit ein eigenes Nachklärbecken.

Der sedimentierte Schlamm kann über eine Schlammleitung 6 abgezogen werden.

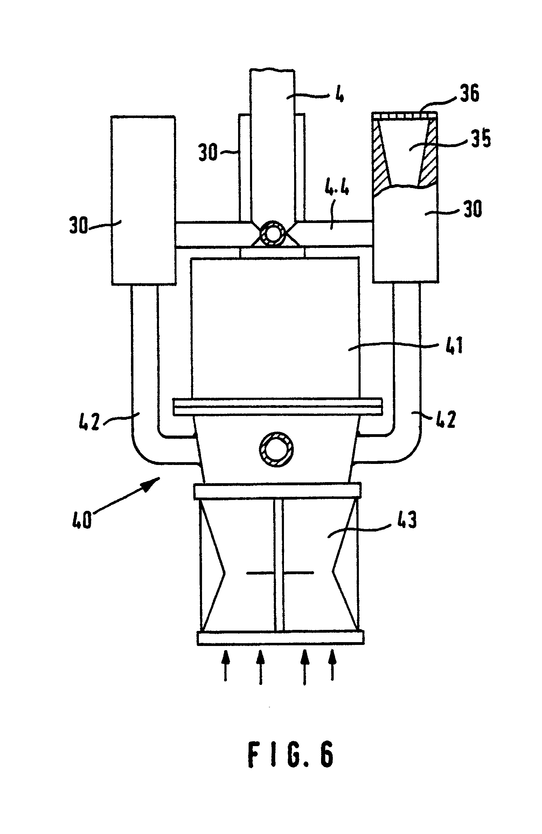

Fig. 6 zeigt die Belüftungseinheit, bestehend aus der Flüssigkeitspumpe 40 mit Motorteil 41 und Pumpenteil 43. Das angesaugte Flüssigkeits-Schlamm-Gemisch wird über Verteilerleitungen 42 den Wasserstrahlgaspumpen 30 zugeführt. Diese sind über Verbindungsleitungen 4.4 mit der Gasleitung 4 verbunden. Die Venturi-Düse 35, in der der Flüssigkeitsdruck wiedergewonnen wird, ist mit einem Gitter 36 abgedeckt, welches verhindert, daß Füllkörper 28 in die Wasserstrahlgaspumpen 30 gelangen können.

Mit einem Reaktor, wie er in Fig. 3 dargestellt ist, wurden mehrmonatige Versuche durchgeführt. Dabei wurden beispielsweise im Januar 1990 mit einem spezifischen Abwasser folgende Werte gemessen:
Reaktorvolumen = 0,50 m$^3$
Füllkörpervolumen = 0,19 m$^3$
Flüssigkeitstemperatur = 25 Grad C
Außentemperatur = 0 Grad C
Abwassermenge Q = 900 l/d
BSB im Zulauf = 1,2 g/l
Raumbelastung BR $\geq$ 2,0 kg BSB/m$^3 \cdot$ d
Im Mittel wurden folgende Werte gemessen:
Im Zulauf:
Ammonium-Stickstoff (NH$_4$-N) = 41,33 mg/l
Nitrat-Stickstoff (NO$_3$-N) = 3,54 mg/l
Gesamt-Stickstoff = 44,87 mg/l
Im Ablauf:
Ammonium-Stickstoff (NH$_4$-N) = 2,09 mg/l
Nitrat-Stickstoff (NO$_3$-N) = 1,83 mg/l
Gesamt-Stickstoff = 3,92 mg/l
entspricht einem Abbau von 91,27 %.

Die durchschnittliche BSB-Belastung betrug 1200 mg/l.

Um 100 kg BSB umzusetzen, sind 5 kg N erforderlich. Bei 1200 mg/l BSB entspricht dies etwa 60 mg/l N. Die Stickstoffbilanz weist einen Stickstoff-Fehlbedarf von 15 mg/l aus, bezogen auf den Stickstoff im Zulauf. Da andere Stickstoffquellen nicht gegeben waren, es wurde kein Harnstoff oder dergleichen zudosiert, kann der Fehlbedarf nur aus dem Luftstickstoff gedeckt worden sein.

Es ist unter Verwendung eines erfindungsgemäßen Klärreaktors überraschenderweise möglich, auch ausgesprochen stickstoffarme Abwässer, wie sie beispielsweise im Weinbau, in Kellereien und in Brauereien anfallen, zu klären, ohne daß wie bei herkömmlichen Kläranlagen nötig Stickstoff in Form von Harnstoff zudosiert werden muß.

Es versteht sich, daß auch die im Abwasser enthaltenen Phosphor-Verbindungen entsprechend abgebaut wurden.

**Ansprüche**

1. Kläranlage, bestehend aus einem biologischen Klärreaktor (10) nach dem aerob/fakultativ/anaeroben Prinzip mit einem Reaktor-Zulauf (1) für die zu reinigende Flüssigkeit sowie mit Füllkörpern (28) als Aufwuchsfläche für sessile Mikroorganismen und einem Nachklärbecken (50) mit einem Beckenablauf (5) für die gereinigte Flüssigkeit, die miteinander in Verbindung stehen, dadurch gekennzeichnet, daß der Klärreaktor (10) gegen Wärmeverluste geschützt ist, daß der Boden (11) des Klärreaktors (10) trichterförmig gestaltet ist, daß im Klärreaktor (10) konzentrisch zur Reaktorwand (12) wenigstens ein inneres als Tauchrohr ausgebildetes Strahlrohr (20) eingebaut ist, dessen Oberkante unterhalb des Flüssigkeitsspiegels liegt, daß unterhalb des inneren Strahlrohrs (20) eine Belüftungseinrichtung, gebildet durch eine Flüssigkeitspumpe (40), eine Wasserstrahlgaspumpe (30) mit Venturirohr und eine Gasleitung (4), positioniert ist, die die zu reinigende Flüssigkeit und den sich absetzenden Schlamm ansaugt und in dem inneren Strahlrohr (20) zusammen mit einem Teil der Füllkörper (28) nach oben fördert, wodurch im Klärreaktor (10) eine Kreisströmung aufrechterhalten wird, und daß das Verhältnis von Reaktorhöhe zu Reaktordurchmesser bzw. -breite zwischen 1 : 2 und 5 : 1 liegt.

2. Kläranlage nach Anspruch 1, dadurch gekennzeichnet, daß der Klärreaktor (10) mittels Deckel (13) vorzugsweise gasdicht verschlossen ist.

3. Kläranlage nach Anspruch 1 oder 2, dadurch gekennzeichnet, daß die Pumpe (40) eine auf dem Reaktorboden (11) vorzugsweise in einer Vertiefung (14) stehende Tauchpumpe ist.

4. Kläranlage nach Anspruch 1, 2 oder 3, dadurch gekennzeichnet, daß der den Füllkörpern (28) zur Verfügung stehende Reaktorbereich durch einen für Flüssigkeit und Schlamm durchlässigen, vorzugsweise trichterförmigen Rost (15) nach unten begrenzt ist.

5. Kläranlage nach Anspruch 4, dadurch gekennzeichnet, daß im Rost (15) ein zentrales Schutzrohr vorgesehen ist, dessen Durchmesser dem Durchmesser der Belüftungseinrichtung, vorzugsweise der Pumpe (40), entspricht.

6. Kläranlage nach einem der Ansprüche 1 bis 5, dadurch gekennzeichnet, daß das untere Ende des inneren Strahlrohrs (20) als Ansaugtrichter (21) zum Ansaugen von Füllkörpern (28) ausgebildet ist.

7. Kläranlage nach einem der Ansprüche 1 bis 6, dadurch gekennzeichnet, daß die Gasleitung (4) an eine Druckgasleitung (4.2, 4.4) angeschlossen ist.

8. Kläranlage nach einem der Ansprüche 1 bis 7, dadurch gekennzeichnet, daß die Gasleitung (4) mit einem Umschalt-bzw. Abschaltventil (4.3) ausgerüstet ist.

9. Kläranlage nach einem der Ansprüche 1 bis 8, dadurch gekennzeichnet, daß der Reaktorraum oberhalb des Flüssigkeitsspiegels mit einer Vakuumpumpe verbunden ist und unter Unterdruck steht.

10. Kläranlage nach einem der Ansprüche 1 bis 9, dadurch gekennzeichnet, daß zwischen Reaktorwand (12) und innerem Strahlrohr (20) ein äußeres Tauchrohr (23) vorgesehen ist, das für eine optimale Rückgewinnung der Wärmeenergie aus der wandnahen Flüssigkeit ausgelegt ist, wobei das Durchmesserverhältnis von innerem Strahlrohr (20) zu äußerem Tauchrohr (23) zwischen 1 : 5 und 3 : 4 liegt.

11. Kläranlage nach einem der Ansprüche 1 bis 10, dadurch gekennzeichnet, daß das Reaktorzulaufrohr (1.2) und/oder das Schlammrückführungsrohr (3.1) tangential in den Klärreaktor (10) eingeführt sind.

12. Kläranlage nach einem der Ansprüche 1 bis 11, dadurch gekennzeichnet, daß der den Füllkörpern (28) zur Verfügung stehende Reaktorbereich sich nach unten konisch erweitert.

13. Kläranlage nach einem der Ansprüche 1 bis 12, dadurch gekennzeichnet, daß die Füllkörper (28) aus extrudierten Kunststoff-Rohrabschnitten, vorzugsweise aus Hart-PVC, bestehen.

14. Kläranlage nach einem der Ansprüche 1 bis 13, dadurch gekennzeichnet, daß das Nachklärbecken (50) einen flach-trichterförmigen Boden (51), einen zentralen Zulauf (2.1) knapp unter dem Flüssigkeitsspiegel und eine das Becken in zwei vorzugsweise konzentrische Teilbecken (53, 54) unterteilende Tauchwand (52) aufweist.

15. Kläranlage nach Anspruch 14, dadurch gekennzeichnet, daß das innere Teilbecken (53) eine Abzugsrinne (56) für Schwimmschlamm besitzt.

FIG.1

FIG. 2

F I G. 3

FIG. 4

FIG. 5

**F I G. 6**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | PATENT ABTRACTS OF JAPAN, Band 11, Nr. 307 (C-450), 7. Oktober 1987; & JP-A-62 095 196 (KATSUMI IIDA) 01-05-1987 --- | 1 | C 02 F 3/06<br>C 02 F 3/10<br>C 02 F 3/20<br>C 02 F 3/22 |
| A | PATENT ABSTRACTS OF JAPAN, Band 12, Nr. 333 (C-526), 8. September 1988; & JP-A-63 093 397 (ISEKI KAIHATSU KOKI: K.K.) 23-04-1988 --- | 1 | |
| A | EP-A-0 268 225 (WAAGNER-BIRO) * Zusammenfassung; Figur 5 * --- | 1,2 | |
| A | DE-A-3 210 493 (HÜLSMANN) * Figur 1 * ----- | 2 | |

| | RECHERCHIERTE SACHGEBIETE (Int. Cl.5) |
|---|---|
| | C 02 F |

Der vorliegende Recherchenbericht wurde für alle Patentansprüche erstellt

| Recherchenort | Abschlußdatum der Recherche | Prüfer |
|---|---|---|
| DEN HAAG | 31-07-1990 | KASPERS H.M.C. |